(19) Europäisches Patentamt
European Patent Office
Office européen des brevets

(11) EP 2 499 007 B1

(12) FASCICULE DE BREVET EUROPEEN

(45) Date de publication et mention
de la délivrance du brevet:
**11.12.2013 Bulletin 2013/50**

(51) Int Cl.:
***B60C 15/06*** *(2006.01)*

(21) Numéro de dépôt: **10768257.7**

(22) Date de dépôt: **25.10.2010**

(86) Numéro de dépôt international:
**PCT/EP2010/066048**

(87) Numéro de publication internationale:
**WO 2011/057889 (19.05.2011 Gazette 2011/20)**

(54) **BOURRELET DE PNEU POUR VÉHICULE PETIT POIDS LOURD**

REIFENWULST FÜR EIN LEICHTES SCHWERFAHRZEUG

TIRE BEAD FOR LIGHT HEAVY-WEIGHT VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.11.2009 FR 0958020**

(43) Date de publication de la demande:
**19.09.2012 Bulletin 2012/38**

(73) Titulaires:
• **Compagnie Générale des Etablissements
Michelin
63000 Clermont-Ferrand (FR)**
• **MICHELIN Recherche et Technique S.A.
1763 Granges-Paccot (CH)**

(72) Inventeurs:
• **LAURENT, Christophe
F-63670 Le Cendre (FR)**
• **DEAN, David
F-63170 Aubiere (FR)**
• **LAVIALLE, David
F-63000 Clermont-Ferrand (FR)**

(74) Mandataire: **Diernaz, Christian
M. F. P. Michelin,
23, place des Carmes Dechaux,
SGD/LG/PI-F35-Ladoux
63040 Clermont-Ferrand Cedex 09 (FR)**

(56) Documents cités:
**US-A- 5 196 077        US-A1- 2008 295 946
US-A1- 2009 056 851**

## Description

Domaine de l'invention

La présente invention concerne un ensemble pneumatique comprenant une jante de montage et un pneumatique à armature de carcasse radiale, et plus particulièrement à un pneumatique de type petit poids lourd (*"light truck"* en anglais), destiné à équiper un véhicule tel qu'une camionnette. Elle concerne plus spécifiquement une nouvelle structure de bourrelet de ces pneus.

État de la technique

En général, un pneumatique du type considéré comprend une armature de carcasse formée d'au moins une nappe de câbles métalliques ou de câbles textiles, cette armature de carcasse étant ancrée dans chaque bourrelet à au moins une tringle, en formant un retournement. L'armature de carcasse est radialement surmontée d'une armature de sommet, composée d'au moins deux nappes de câbles métalliques, croisés d'une nappe à la suivante en formant avec la direction circonférentielle des angles compris entre 10° et 45°. Le retournement de l'armature de carcasse comprend, vue dans un plan de coupe radial (c'est-à-dire un plan contenant l'axe de rotation du pneu) une extrémité située à une distance appropriée de l'axe de rotation du pneu de façon à assurer une bonne tenue mécanique du bourrelet lors de l'utilisation du pneu. Entre l'armature de carcasse et le retournement sont disposés un ou des profilés à base de mélanges de caoutchouc.

Ce pneu est destiné à être monté sur une jante de montage comprenant une partie (nommée siège de jante) destinée à recevoir les bourrelets d'un pneu et axialement à l'extérieur de chaque siège un rebord destiné à limiter axialement le déplacement des bourrelets du pneu lors du gonflage. Il est connu qu'un même pneu pour camionnette ou petit poids lourd peut être monté sur plusieurs jantes ayant des géométries de rebord différentes. Par géométries différentes, on entend ici que ces jantes se distinguent par des hauteurs de rebord différentes et des profils de crochet à courbures différentes. Selon la hauteur et la forme des rebords, on comprend aisément que des niveaux de contraintes peuvent être particulièrement pénalisants sur l'endurance des bourrelets et par voie de conséquence sur celle du pneu. Le cas le plus pénalisant est obtenu avec des hauteurs faibles de rebord et des crochets de petits rayons de courbure.

Pour améliorer l'endurance des bourrelets de tels pneus, des solutions ont été proposées. En particulier le brevet US-5433257 décrit une structure de bourrelet dans laquelle un premier profilé de section triangulaire prend appui sur la tringle de section circulaire et s'étend en s'amincissant radialement vers l'extérieur jusqu'à un point situé sensiblement à la même hauteur que l'extrémité du retournement de l'armature de carcasse.

Ce premier profilé est plaqué contre l'armature de carcasse. En outre, un deuxième profilé prolonge le premier jusqu'à un point radialement à l'extérieur de l'extrémité du retournement ; ce deuxième profilé assure la liaison par contact entre le premier profilé et le retournement de l'armature de carcasse. Le premier profilé est réalisé dans un matériau ayant un module d'élasticité à 100% de déformation d'extension égal à 6 MPa alors que le deuxième profilé est réalisé dans un matériau ayant un module d'élasticité à 100% de déformation d'extension égal à au moins 1.5 MPa et au plus égal à 3.5 MPa.

Dans la structure selon l'art antérieur et dans un plan de coupe radial, c'est-à-dire un plan contenant l'axe de rotation, la distance à l'axe de rotation du point d'extrémité du retournement est supérieure à la distance du point de la jante de montage sur laquelle le pneu est destiné à être monté. Enfin, une armature additionnelle comprenant une pluralité de renforts faisant un angle différent de l'angle des renforts de l'armature de carcasse est prévue pour envelopper en partie le retournement et l'armature de carcasse dans le bourrelet. Des matériaux caoutchoutiques sont par ailleurs prévus pour découpler le retournement de l'armature additionnelle. En outre, un profilé est prévu axialement à l'extérieur de l'armature additionnelle pour prendre appui sur le rebord de jante.

Cette structure bien que présentant de bonnes performances en endurance, confère au pneu un surpoids dont on sait qu'il est un facteur particulièrement surveillé dans le développement des nouveaux véhicules petit poids lourd et camionnette.

Un autre pneu est divulgué dans le document US-A-2009056851.

Il est recherché une structure de bourrelet de pneu pour véhicules petit poids lourd et camionnette qui soit allégée sans pour autant générer une perte de performance, notamment de tenue mécanique lors d'un échauffement des bourrelets résultant de freinages répétitifs. Les recherches des demanderesses ont mis en évidence que les structures de bourrelet rappelées plus haut pouvaient être nettement améliorées par un choix judicieux des profilés et des matériaux à base de caoutchouc constituant le bourrelet du pneu.

Exposé de l'invention

Dans ce but, il est proposé un ensemble pneumatique comprenant une jante de montage et un pneu à armature de carcasse radiale comportant des renforts (métalliques ou textiles) orientés radialement, ce pneu comprenant des bourrelets destinés à venir en contact avec jante de montage. Cette jante de montage comprend un siège prolongé axialement à l'extérieur par une partie formant un rebord de jante dont les points radialement les plus à l'extérieur sont à une distance Rr de l'axe de rotation du pneu. Vu dans un plan de coupe radial (c'est-à-dire dans un plan de coupe contenant l'axe de rotation), ce rebord se compose d'une partie rectiligne prolongeant le siège de jante, cette partie rectiligne étant prolongée radialement vers l'extérieur par une partie formant un crochet.

L'armature de carcasse est retournée dans chaque bourrelet autour d'une tringle tressée formée par une pluralité de fils métalliques, cette tringle ayant une section transversale, c'est-à-dire dans un plan de coupe radial, sensiblement circulaire pour former un retournement. Ce retournement a, vu dans un plan de coupe radial, une extrémité située à une distance Hc du point K de la tringle, vue dans le même plan de coupe radial, radialement le plus à l'intérieur. Cette distance Hc est au moins égale à 18 mm et au plus à 26 mm.

Ce bourrelet comprend, disposés entre l'armature de carcasse et le retournement, deux profilés en matériau caoutchoutique. Un premier profilé s'étend à partir de la tringle de bourrelet et le long du retournement jusqu'à un point situé à une distance He, cette distance étant mesurée, dans un plan de coupe radial, par rapport au point radialement le plus à l'intérieur de la tringle. La longueur de couplage mécanique de ce premier profilé avec l'armature de carcasse est notée L1 et est mesurée entre l'extrémité radialement la plus à l'extérieur du premier profilé et un point axialement le plus à l'intérieur du contact avec la tringle. La longueur de couplage mécanique de ce même premier profilé avec le retournement est notée L2 ; cette longueur L2 est mesurée entre le point radialement le plus à l'extérieur en contact avec le retournement et un point axialement le plus à l'extérieur du contact avec la tringle. Le point radialement le plus à l'extérieur du premier profilé est à une distance Hi du point radialement le plus à l'intérieur de la tringle. Ce premier profilé est réalisé à partir d'un matériau ayant un module sécant en extension, à 10% d'allongement, qui est supérieur à 20 MPa, plus préférentiellement supérieur à 30 MPa. Encore plus préférentiellement le module de ce premier profilé est au moins égal à 40 MPa et au plus égal à 70 MPa.

Un deuxième profilé est disposé dans le bourrelet de manière à être en contact avec une face du premier profilé et avec le retournement de l'armature de carcasse à partir d'une hauteur égale à He. Ce deuxième profilé s'étend très largement radialement au delà de l'extrémité du retournement jusqu'à une distance H2 mesurée par rapport au point radialement le plus à l'intérieur de la tringle. Le matériau de ce deuxième profilé a un module sécant en extension, à 10% d'allongement, qui est au moins égal à 7 MPa et un module sécant en extension, à 100% d'allongement, qui est au moins égal à 4.5 MPa.

Ce deuxième profilé présente, au niveau de l'extrémité du retournement, une épaisseur B au moins égale à 1 mm et au plus égale à la largeur axiale de la tringle (largeur mesurée dans la direction parallèle à l'axe de rotation et correspondant dans le cas d'une tringle de section transversale circulaire au diamètre de cette tringle).

La hauteur He du premier profilé en contact avec le retournement de carcasse est telle que la longueur de collage L2 du premier profilé avec le retournement est au plus égale à la moitié de la longueur Lr du retournement (cette longueur Lr étant mesurée comme la longueur de retournement en contact avec les premier et deuxième profilés, c'est-à-dire la longueur de contact mesurée de l'extrémité du retournement au point de contact axialement le plus à l'extérieur de la tringle).

Ce bourrelet comprend, en outre, axialement à l'extérieur du retournement de l'armature de carcasse, un profilé de remplissage et un profilé de protection, ce dernier - axialement à l'extérieur du profilé de remplissage - étant prévu pour venir en contact avec le rebord de jante. Dans le pneu selon l'invention, ces profilés de protection et de remplissage ont des épaisseurs appropriées de façon que la distance A entre l'armature de carcasse et le profil externe de bourrelet dans sa partie pouvant être en contact avec le rebord de jante est telle que

$$\frac{1}{4}A \leq B \leq \frac{1}{2}A,$$ B mesurant la distance séparant l'extrémité du retournement de l'armature de carcasse de l'armature de carcasse et mesurée sur une droite perpendiculaire à l'armature de carcasse. La jante préférentiellement utilisée correspond à celle dont le rebord est le plus petit parmi tous les rebords de jantes utilisables pour monter le pneu considéré.

La mesure des distances A et B se fait à partir de l'extérieur des renforts de l'armature de carcasse ou du retournement (c'est-à-dire à partir de la surface externe des renforts).

Avantageusement, le premier profilé est préférentiellement choisi comme une composition de caoutchouc comprenant une résine renforçante additionnelle constituée par exemple d'un accepteur de méthylène tel qu'une résine formophénolique, à un taux préférentiel compris entre 3 et 15 pce, plus préférentiellement compris entre 5 et 12 pce, et un donneur de méthylène tel que l'hexaméthylènetetramine ("HMT") ou encore l'hexamethoxy-methylmelamine ("HMMM", encore notée "H3M"), à un taux préférentiel compris entre 1 et 10 pce, plus préférentiellement compris entre 3 et 7 pce ("pce" e correspond au nombre de parties en poids du composant pour cent parties d'élastomère).

Dans un aspect de l'invention, l'épaisseur du deuxième profilé est sensiblement égale à l'épaisseur du profilé de remplissage prise au même niveau (notamment à l'extrémité du retournement de l'armature de carcasse) pour permettre une meilleure absorption de la flexion sur les rebords de jante et ainsi diminuer l'usure par frottement du bourrelet contre lesdits rebords. Ainsi choisies, ces épaisseurs permettent d'éviter que le retournement ne soit soumis à des contraintes de compression lors de ces déformations de flexion en roulage.

Selon un autre aspect de l'invention, la tringle d'ancrage de l'armature de carcasse est entourée d'une couche de matériau élastomère dont le module sécant d'élasticité en tension est sensiblement égal au module sécant d'élasticité en tension du matériau constituant le premier profilé. Par sensiblement égal, on entend que la les matériaux peuvent être identiques ou encore présenter des modules au plus différents de 10%.

Définitions :

Par radialement vers l'extérieur, on entend une direction perpendiculaire à l'axe de rotation et s'éloignant dudit axe. Par axialement à l'intérieur on entend une orientation pointant vers l'intérieur de la cavité interne du pneu à l'intérieur de laquelle agit une pression de gonflage.

Par plan de coupe radial, on entend un plan qui contient l'axe de rotation.

Avantageusement, l'extrémité du deuxième profilé radialement la plus à l'extérieur par rapport à l'axe de rotation est à une distance H2 du point radialement le plus à l'intérieur de la tringle et est au moins égale à 1 fois et au plus égale à 2.5 fois la distance Hc de l'extrémité du retournement par rapport au point radialement le plus à l'intérieur de la tringle.

Avantageusement, la distance He mesurant la hauteur de contact entre le premier profilé et le retournement de l'armature de carcasse est au moins égale à la largeur axiale de la tringle et au plus 0.75 fois la distance Hc de l'extrémité du retournement.

La distance Hi du dernier point du premier profilé en contact avec l'armature de carcasse est supérieure à la distance He mesurant la hauteur de contact entre le premier profilé et le retournement. Cette distance Hi est au moins égale à 0.5 fois et au plus égale à 1.25 fois la distance Hc.

Brève présentation des figures

Les caractéristiques de l'invention seront mieux comprises à l'aide de la description qui suit et qui se réfère au dessin, illustrant à titre non limitatif un exemple d'exécution, dessin sur lequel :

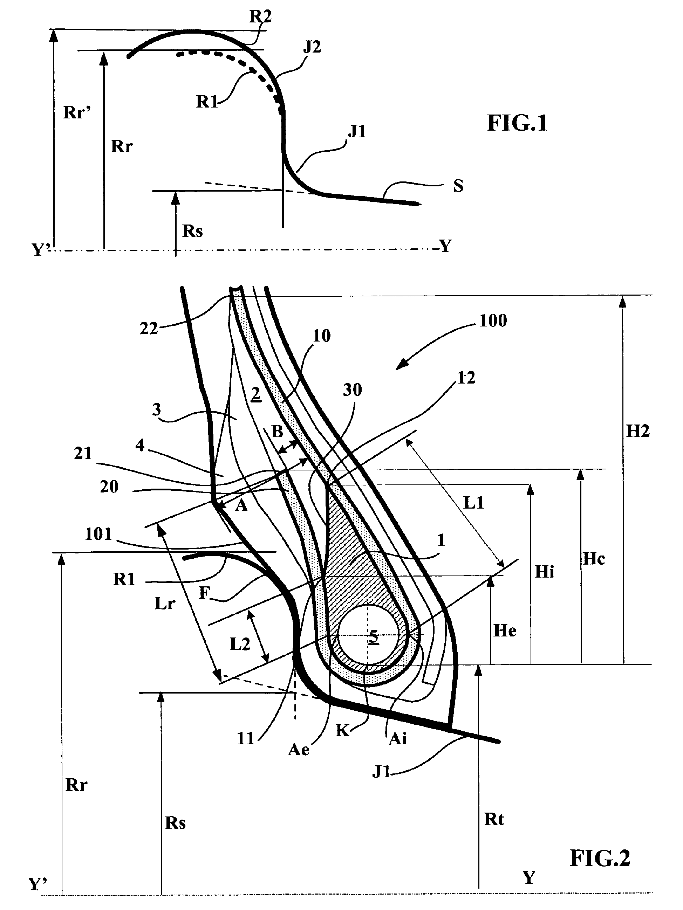

**[0027]** - la figure 1 montre plusieurs profils, vus en section méridienne, de jante de montage pour un même pneu destiné à un véhicule camionnette ;

**[0028]** - la figure 2 montre schématiquement une coupe dans un plan radial d'un bourrelet conforme à l'invention.

Exposé détaillé d'au moins un mode de réalisation

La figure 1 montre partiellement deux jantes de montage J1 et J2 pour un pneu destiné à une camionnette (et notamment un pneu conforme à l'invention et tel que représenté à la figure 2). Ces jantes de montage comprennent une partie formant siège de jante S incliné d'un angle égal à 5 degrés par rapport à la direction de l'axe de rotation YY', ces sièges de jante S étant destinés à recevoir des sièges de bourrelet de pneu. Axialement à l'extérieur de ces sièges, sont formés des rebords R1 et R2 ayant pour fonction de limiter le déplacement axial des bourrelets. Ces rebords sont formés d'une partie plane sensiblement perpendiculaire à l'axe de rotation YY' prolongée radialement vers l'extérieur par une partie recourbée formant une sorte de crochet. Une particularité d'usage de certains pneus pour camionnette est de pouvoir être montés sur des jantes se distinguant entre elles par la géométrie de leurs rebords. Le diamètre nominal de cette jante est obtenu comme deux fois la distance à l'axe de rotation séparant le point d'intersection entre la partie rectiligne du rebord avec le siège de jante.

Dans le cas montré, une jante J1 comprend un rebord R1 dont les points radialement les plus à l'extérieur sont à une distance Rr de l'axe de rotation. Une jante J2 comprend un rebord R2 dont les points radialement les plus à l'extérieur sont à une distance Rr' de l'axe de rotation, cette distance Rr' étant supérieure à la distance Rr. Dans le cas montré, ces deux jantes ont des sièges de même géométrie, la jante J1 comprenant un crochet qui présente une courbure plus prononcée que celle du crochet de l'autre jante J2. C'est cette jante J1, pour laquelle le profil autour duquel les bourrelets d'un pneu s'enroulent présente un plus petit rayon de courbure, qui se révèle comme étant la plus pénalisante sur l'endurance de ces bourrelets.

Avec la figure 2, on montre un bourrelet 100 d'un pneu pour camionnette de dimension 195/75 R 16 selon l'invention.

Ce pneu est représenté monté sur une jante de montage J1 dont l'appellation est 6J16 dans la norme E.T.R.T.O.. Cette jante montrée à la figure 1 est considérée comme la plus pénalisante pour les bourrelets du pneu. Le rayon Rs nominal est égal à 203 mm et le rayon des points du rebord les plus à l'extérieur radialement sont à une distance Rr égale à 220.3 mm de l'axe de rotation. Le pneu gonflé à sa pression nominale de 6 bars est destiné à supporter une charge de 1325 kg.

Ce pneu comprend une armature de carcasse 10 formée d'une nappe unique en matériau caoutchouc renforcée par des renforts métalliques de structure 12-15NF, c'est-à-dire de 12 fils de 15/100 de millimètre de diamètre. Ces renforts de l'armature de carcasse sont orientés radialement dans le pneu, c'est-à-dire pour faire un angle égal ou proche à 90 degrés avec une direction tangente circonférentielle et avec un pas égal à 1.25 mm, ce pas étant mesuré au point radialement le plus à l'intérieur de la tringle d'ancrage. Le matériau caoutchoutique de cette armature a un module sécant à 10% d'allongement mesuré à 23°C qui est égal à 8.2 MPa.

La tringle 5 est obtenue par un enroulement en hélice autour d'une âme circulaire et a une section transversale sensiblement circulaire de diamètre moyen au moins égal à 5 mm et au plus égal à 10mm, dans le cas présent égal à 6.8 mm. Cette tringle a un rayon interne Rt égal dans le cas présent à 205.5 mm. Dans le cas présent la tringle est enrobée par le matériau composant le premier profilé en faisant le tour complet de ladite tringle avec une épaisseur sensiblement uniforme au moins dans la partie radialement à l'intérieur de la tringle.

L'armature de carcasse 10 est enroulée dans chaque bourrelet autour de la tringle 5 de l'intérieur vers l'extérieur du pneu pour former un retournement 20 s'étendant sensiblement parallèlement à l'armature de carcasse 10 et radialement vers l'extérieur par rapport à l'axe de rotation. Vu dans un plan de coupe radial correspondant à celui de la figure, ce retournement 20 comprend une extrémité 21 située à une distance Hc du point K radialement le plus à l'intérieur de la tringle 5 et qui est dans le cas présent égale à 18.2 mm (soit 1.05 fois la hauteur du crochet de la jante de montage). À noter que le dessin n'est donné qu'à titre indicatif et qu'il ne respecte pas nécessairement ces rapports d'échelle.

Entre l'armature de carcasse 10 et son retournement 20, un premier profilé 1 s'étend à partir de la tringle 5 jusqu'à une distance maximale Hi égale ici à 19.1 mm, cette distance étant mesurée, dans un plan de coupe radial, par rapport au point K radialement le plus à l'intérieur de la tringle. Ce premier profilé 1 est en contact avec le retournement 20 jusqu'à une distance He égale à 10.6 mm (distance mesurée par rapport au point K radialement le plus à l'intérieur de la tringle).

Ce premier profilé 1 est réalisé dans un matériau ayant un module sécant en extension, à 10% d'allongement et à 23 °C, qui est supérieur à 20 MPa et dans le cas présent égal à 52,4 MPa. Ce premier profilé 1 est en contact avec la tringle 5 et avec le retournement sur une longueur L2, cette longueur étant prise entre le point radialement le plus à l'extérieur en contact avec le retournement (point de hauteur He) et le point Ae qui est défini comme le point de la tringle axialement le plus à l'extérieur. Ici cette longueur L2 est égale sensiblement à 7 mm.

En outre, un deuxième profilé 2 est disposé dans le bourrelet de manière à être en contact avec une face du premier profilé et le retournement de l'armature de carcasse à partir d'un point situé à une distance He mesurée par rapport au point K. Le retournement de carcasse est en contact avec ce deuxième profilé 2 entre point situé à une distance He et l'extrémité 21 dudit retournement radialement la plus éloignée de l'axe de rotation.

Ce deuxième profilé 2 s'étend radialement vers l'extérieur jusqu'à une distance H2, mesurée par rapport au point K de la tringle radialement le plus à l'intérieur, égale dans le cas présent à 39 mm. Ce deuxième profilé 2 est réalisé dans un matériau ayant un module sécant en extension, à 10% d'allongement et pour une température de 23 °C, qui est au moins égal à 7 MPa et dans le cas présent égal à 7.8 MPa et un module sécant en extension, à 100% d'allongement et pour une température de 23 °C, qui est au moins égal à 4.5 MPa, dans le cas présent égal à 4.5 MPa. Par définition et pour toutes les distances mesurées à partir du point K, ces distances correspondent aux rayons des cercles centrés sur le point K et passant par les points dont on veut préciser leur position par rapport audit point K. Dans le cas présent, la longueur totale de couplage Lr entre le retournement 20 et les premier et deuxième profilés 1, 2 est sensiblement égale à 15.7 mm. Les premier et deuxième profilés 1 et 2 respectivement ont une face commune 30, cette face commune 30 s'étendant entre le point 12 radialement le plus à l'extérieur du premier profilé 1 et le point 11 du même premier profilé 1 situé à une distance He du point K de la tringle 5.

La représentation du bourrelet 100 selon l'invention montre ce bourrelet tel qu'il est lorsque le pneu est monté et gonflé à sa pression nominale. Dans cette configuration, le bourrelet comprend un profilé de protection 4 axialement à l'extérieur qui est formé par un matériau ayant des propriétés appropriées pour résister aux mouvements de flexion contre le rebord de jante au cours du roulage du pneu. Ce matériau est dit protecteur contre une usure trop rapide du bourrelet contre le métal formant la jante. Dans le cas présent, ce matériau protecteur a un module d'extension à 10% et 23 °C qui est égal à 6.6 MPa. Entre ce profilé protecteur 4 et le retournement 20, il est prévu un profilé de remplissage 3 apte à absorber les contraintes se développant axialement à l'extérieur du retournement lors des cycles de flexion dus au roulage. Le matériau du profilé de remplissage 3 a un module d'extension à 10% et 23 °C qui est égal à 3.7 MPa. Ce bourrelet 100 comprend axialement à l'extérieur du retournement 20 de l'armature de carcasse une épaisseur de matériau définissant un profil externe de bourrelet 101. Une partie seulement de ce profil externe de bourrelet 101 peut être en contact avec le rebord de jante R1.

Dans cette configuration de gonflage seul, on note que le profilé de protection 4 du bourrelet est en contact avec le rebord de jante R1 jusqu'à un point F. La distance B séparant l'extrémité du retournement de l'armature de carcasse de cette armature est égale 3.6 mm (mesure faite entre les renforts de l'armature et du retournement). La distance A mesurée au même endroit entre l'armature de carcasse et le profil extérieur du bourrelet est dans le cas présent égale à 11.9 mm. Les grandeurs A et B satisfont la relation $\dfrac{1}{4}A \leq B \leq \dfrac{1}{2}A$ (B est effectivement compris entre 2.98 mm et 5.95 mm dans l'exemple décrit).

À chaque passage dans le contact, la partie du pneu concernée voit chacun de ses bourrelets 100 s'enrouler au moins partiellement autour d'un rebord et plus précisément autour de la partie radialement à l'extérieur formant une sorte de crochet. Sous ces sollicitations cycliques, le retournement 20 est sévèrement sollicité et par ailleurs ces sollicitations sont amplifiées par des températures de fonctionnement élevées consécutives à un échauffement résultant notamment des montées en températures des organes de freinage du véhicule.

On constate qu'après un roulage en charge et vitesse stabilisées, la température maximale dans ce bourrelet selon l'invention est au plus égale à 90°C alors qu'elle est supérieure à 95°C pour des structures usuelles notamment celles de l'art antérieur cité dans ce document.

L'invention ne doit pas être interprétée comme étant limitée par l'exemple décrit et diverses modifications peuvent y être apportées sans sortir de son cadre.

## Revendications

1. Ensemble formé d'un pneu à armature de carcasse radiale comportant des renforts orientés radialement et d'une jante de montage (J1), ce pneu comprenant des bourrelets (100) destinés à venir en contact avec la jante de montage (J1), cette jante comprenant un siège prolongé axialement à l'extérieur par une partie formant un rebord de jante (R1) dont la partie radialement la plus à l'extérieur est à une distance Rr de l'axe de rotation et a une forme sensiblement circulaire dans un plan de coupe contenant l'axe de rotation, chaque bourrelet (100) comprenant une tringle d'ancrage (5), le pneu étant renforcé par une armature de carcasse (10) retournée dans chaque bourrelet autour de cette tringle d'ancrage, pour former un retournement (20) ayant, dans un plan de coupe radial, une extrémité (21) positionnée, une fois le pneu monté sur sa jante de montage, à une distance Hc du point K de la tringle (5) radialement le plus à l'intérieur qui est au moins égale à 18 mm et au plus égale à 26 mm, ce bourrelet (100) comprenant axialement à l'extérieur du retournement (20) de l'armature de carcasse une épaisseur de matériau définissant un profil externe de bourrelet (101), ce profil externe de bourrelet étant tel que la distance A mesurée entre l'armature de carcasse (10) et ce profil externe de bourrelet (101) dans sa partie pouvant être en contact avec le rebord de jante est telle que $\frac{1}{4} A \leq B \leq \frac{1}{2} A$, avec B mesurant la distance séparant l'armature de carcasse de l'extrémité (21) du retournement de l'armature de carcasse, cette distance étant mesurée sur une droite perpendiculaire à l'armature de carcasse et passant par l'extrémité du retournement, ce bourrelet comprenant, placés entre l'armature de carcasse (10) et le retournement (20), un premier et un deuxième profilés (1, 2),

   - le premier profilé (1) s'étendant à partir de la tringle (5) de bourrelet jusqu'à une distance maximale Hi, cette distance étant mesurée, dans un plan de coupe méridien, par rapport au point radialement le plus à l'intérieur de la tringle, ce premier profilé (1) étant en contact avec le retournement (20) jusqu'à une distance He, ce premier profilé (1) étant réalisé dans un matériau ayant un module sécant en extension, à 10% d'allongement, qui est supérieur à 20 MPa,
   - un deuxième profilé (2) étant disposé dans le bourrelet de manière à être en contact avec une face (30) du premier profilé et avec le retournement (20) de l'armature de carcasse à partir d'une hauteur égale à He, ce deuxième profilé (2) s'étendant jusqu'à une distance H2 mesurée par rapport à la base de la tringle (5), ce deuxième profilé (2) étant réalisé dans un matériau ayant un module sécant en extension, à 10% d'allongement, qui est au moins égal à 7 MPa et un module sécant en extension, à 100% d'allongement, qui est au moins égal à 4.5 MPa,

   et en outre, ce deuxième profilé (2) présentant, au niveau de l'extrémité (21) du retournement (20) de l'armature de carcasse, une épaisseur comprise entre 1 mm et la largeur axiale de la tringle, et la hauteur He du premier profilé (1) en contact avec le retournement de carcasse (20) étant telle que la longueur de couplage L2, mesurée entre le point (21) radialement le plus à l'extérieur en contact avec le retournement (20) et le point axialement le plus à l'extérieur Ae du contact avec la tringle (5), est au plus égale à la moitié de la longueur Lr du retournement (20), cette longueur Lr étant mesurée comme la longueur de retournement en contact avec les premier et deuxième profilés, c'est-à-dire la longueur de contact mesurée de l'extrémité (21) du retournement au point de contact axialement le plus à l'extérieur Ae de la tringle.

2. Ensemble selon la revendication 1 **caractérisé en ce que** le premier profilé (1) est réalisé dans un matériau ayant un module sécant en extension, à 10% d'allongement, qui est au moins égal à 40 MPa et au plus égal à 70 MPa.

3. Ensemble selon l'une des revendications 1 ou 2 **caractérisé en ce que** le matériau formant le premier profilé (1) est une composition de caoutchouc comprenant une résine renforçante additionnelle constituée d'un accepteur de méthylène tel qu'une résine formophénolique, avec un taux préférentiel compris entre 3 et 15 pce, et un donneur de méthylène tel que l'hexaméthylènetétramine ("HMT") ou encore l'hexamethoxy-methylmélamine ("HMMM", encore notee "H3M"), avec un taux préférentiel compris entre 1 et 10 pce.

4. Ensemble selon l'une des revendications 1 à 3 **caractérisé en ce que** l'extrémité (22) du deuxième profilé (2) radialement la plus à l'extérieur par rapport à l'axe de rotation est à une distance H2 du point K radialement le plus à l'intérieur de la tringle, cette distance étant comprise entre 1 fois et 2.5 fois la distance de l'extrémité du retournement Hc par rapport au point K radialement le plus à l'intérieur de la tringle.

**5.** Ensemble selon l'une des revendications 1 à 4 **caractérisé en ce que** le point (12) du premier profilé (1) en contact avec l'armature de carcasse radialement le plus à l'extérieur est à une distance Hi qui est supérieure à la distance He mesurant la hauteur de contact entre le premier profilé et le retournement et **en ce que** cette distance Hi est comprise entre 0.5 fois et 1.25 fois la distance Hc, ces distances Hi, He, Hc étant prises par rapport au point K radialement le plus à l'intérieur de la tringle (5).

**Patentansprüche**

**1.** Einheit, gebildet von einem Reifen mit radialer Unterbaubewehrung, umfassend Verstärkungen, die radial ausgerichtet sind, und eine Montagefelge (J1), wobei dieser Reifen Wülste (100) umfasst, die dazu bestimmt sind, mit der Montagefelge (J1) in Kontakt zu kommen, wobei diese Felge einen Sitz umfasst, der axial nach außen durch einen Teil verlängert ist, der einen Felgenrand (R1) bildet, dessen radial am weitesten außen befindlicher Teil in einem Abstand Rr zur Drehachse ist und eine im Wesentlichen kreisförmige Form in einer Schnittebene, die die Drehachse enthält, hat, wobei jeder Wulst (100) ein Verankerungsgestänge (5) umfasst, wobei der Reifen durch eine Unterbaubewehrung (10) verstärkt ist, die in jedem Wulst um dieses Verankerungsgestänge umgeschlagen ist, um einen Umschlag (20) zu bilden, der in einer radialen Schnittebene ein Ende (21) aufweist, das, wenn der Reifen auf seiner Montagefelge montiert ist, in einem Abstand Hc zum Punkt K des radial am weitesten innen befindlichen Gestänges (5) positioniert ist, der mindestens gleich 18 mm und höchstens gleich 26 mm ist, wobei dieser Wulst (100) axial außerhalb des Umschlags (20) der Unterbaubewehrung eine Materialdicke aufweist, die ein äußeres Wulstprofil (101) definiert, wobei dieses äußere Wulstprofil derart ist, dass der Abstand A, der zwischen der Unterbaubewehrung (10) und diesem äußeren Wulstprofil (101) in seinem Teil, der mit dem Felgenrand in Kontakt sein kann, gemessen wird, derart ist, dass $1/4A \le B \le 1/2A$, wobei B den Abstand zwischen der Unterbaubewehrung und dem Ende (21) des Umschlags der Unterbaubewehrung misst, wobei dieser Abstand auf einer Geraden senkrecht auf die Unterbaubewehrung, die durch das Ende des Umschlags verläuft, gemessen wird, wobei dieser Wulst, zwischen der Unterbaubewehrung (10) und dem Umschlag (20) angeordnet, ein erstes und ein zweites Profil (1, 2) umfasst,

- wobei sich das erste Profil (1) vom Wulstgestänge (5) bis zu einem maximalen Abstand Hi erstreckt, wobei dieser Abstand in einer mittleren Schnittebene in Bezug zum radial am weitesten innen liegenden Punkt des Gestänges gemessen wird, wobei dieses erste Profil (1) mit dem Umschlag (20) bis zu einem Abstand He in Kontakt ist, wobei dieses erste Profil (1) aus einem Material hergestellt ist, das ein Sekantenmodul bei Dehnung mit 10 % Verlängerung hat, das größer als 20 MPa ist,

- wobei ein zweites Profil (2) in dem Wulst derart angeordnet ist, dass es mit einer Seite (30) des ersten Profils und mit dem Umschlag (20) der Unterbaubewehrung von einer Höhe gleich He aus in Kontakt ist, wobei sich dieses zweite Profil (2) bis zu einem Abstand H2 erstreckt, gemessen in Bezug zur Basis des Gestänges (5), wobei dieses zweite Profil (2) aus einem Material hergestellt ist, das ein Sekantenmodul bei Dehnung mit 10 % Verlängerung hat, das mindestens gleich 7 MPa ist, und ein Sekantenmodul bei Dehnung mit 100 % Verlängerung hat, das mindestens gleich 4,5 MPa ist,

und wobei ferner dieses zweite Profil (2) im Bereich des Endes (21) des Umschlags (20) der Unterbaubewehrung eine Dicke zwischen 1 mm und der axialen Breite des Gestänges aufweist, und wobei die Höhe He des ersten Profils (1), das mit dem Unterbauumschlag (20) in Kontakt ist, derart ist, dass die Kupplungslänge L2, gemessen zwischen dem radial am weitesten außen liegenden Punkt (21), der mit dem Umschlag (20) in Kontakt ist, und dem axial am weitesten außen liegenden Punkt Ae, der mit dem Gestänge (5) in Kontakt ist, höchstens gleich der Hälfte der Länge Lr des Umschlags (20) ist, wobei diese Länge Lr als die Umschlaglänge in Kontakt mit dem ersten und zweiten Profil gemessen wird, d.h. die gemessene Kontaktlänge (21) des Umschlags am axial am weitesten entfernten Kontaktpunkt Ae des Gestänges.

**2.** Einheit nach Anspruch 1, **dadurch gekennzeichnet, dass** das erste Profil (1) aus einem Material mit einem Sekantenmodul bei Dehnung mit 10 % Verlängerung hergestellt ist, das mindestens gleich 40 MPa und höchstens gleich 70 MPa ist.

**3.** Einheit nach einem der Ansprüche 1 oder 2, **dadurch gekennzeichnet, dass** das Material, das das erste Profil (1) bildet, eine Kautschukzusammensetzung ist, umfassend ein zusätzliches verstärkendes Harz, das von einem Methylenakzeptor, wie einem Formophenolharz, mit einer bevorzugten Rate zwischen 3 und 15 pce, und einem Methylendonator, wie Hexamethylentetramin ("HMT") oder auch Hexamethoxymethylmelamin ("HMMM", auch "H3M"), mit einer bevorzugten Rate zwischen 1 und 10 pce gebildet ist.

**4.** Einheit nach einem der Ansprüche 1 bis 3, **dadurch gekennzeichnet, dass** das Ende (22) des in Bezug zur Drehachse radial am weitesten außen liegenden Profils (2) in einem Abstand H2 zum radial am weitesten innen liegenden Punkt K des Gestänges angeordnet ist, wobei dieser Abstand zwischen 1-mal und 2,5-mal den Abstand des Endes des Umschlags Hc in Bezug zum radial am weitesten innen liegenden Punkt K des Gestänges ausmacht.

**5.** Einheit nach einem der Ansprüche 1 bis 4, **dadurch gekennzeichnet, dass** der Punkt (12) des ersten Profils (1), der mit der radial am weitesten außen liegenden Unterbaubewehrung in Kontakt ist, in einem Abstand Hi angeordnet ist, der größer als der Abstand He ist, der die Kontakthöhe zwischen dem ersten Profil und dem Umschlag misst, und dass dieser Abstand Hi zwischen 0,5-mal und 1,25-mal den Abstand Hc beträgt, wobei diese Abstände Hi, He, Hc in Bezug zum radial am weitesten innen liegenden Punkt K des Gestänges (5) gemessen sind.

**Claims**

**1.** Assembly formed of a radial carcass reinforcement tyre comprising radially directed reinforcing elements and of a mounting rim (J1), this tyre comprising beads (100) intended to come into contact with the mounting rim (J1), this rim comprising a seat extended axially on the outside by a part forming a rim flange (R1) the radially outermost part of which is at a distance Rr from the axis of rotation and which has a substantially circular shape in a plane of section containing the axis of rotation. Each bead (100) comprising an anchoring bead wire (5), the tyre being reinforced by a carcass reinforcement (10) which in each bead is turned back around this anchoring bead wire to form a turned-back portion (20) which, in a radial plane of section, has one end (21) positioned, once the tyre has been mounted on its mounting rim, at a distance Hc from the radially innermost point K of the bead wire (5) which is at least equal to 18 mm and at most equal to 26 mm, this bead (100) comprising, axially on the outside of the turned-back portion (20) of carcass reinforcement a thickness of material defining a bead external profiled element (101), this bead external profiled element being such that the distance A measured between the carcass reinforcement (10) and this bead external profiled element (101) in its part that can be in contact with the rim flange is such that $\frac{1}{4} A \leq B \leq \frac{1}{2} A$, with B measuring the distance separating the carcass reinforcement from the end (21) of the turned-back portion of carcass reinforcement, this distance being measured on a straight line perpendicular to the carcass reinforcement and passing through the end of the turned-back portion, this bead comprising, positioned between the carcass reinforcement (10) and the turned-back portion (20), a first and a second profiled element (1, 2),

- the first profiled element (1) extending from the bead wire (5) out to a maximum distance Hi, this distance being measured, in a meridian plane of section, with respect to the radially innermost point of the bead wire, this first profiled element (1) being in contact with the turned-back portion (20) out to a distance He, this first profiled element (1) being made of a material having a secant extension modulus at 10% elongation that is greater than 20 MPa,

- a second profiled element (2) being arranged in the bead in such a way as to be in contact with one face (30) of the first profiled element and with the turned-back portion (20) of carcass reinforcement out from a height equal to He, this second profiled element (2) extending out to a distance H2 measured with respect to the base of the bead wire (5), this second profiled element (2) being made of a material having a secant extension modulus at 10% elongation that is at least equal to 7 MPa and a secant extension modulus at 100% elongation that is at least equal to 4.5 MPa,

and furthermore, this second profiled element (2) having, in the region of the end (21) of the turned-back portion (20) of carcass reinforcement, a thickness of between 1 mm and the axial width of the bead wire, and the height He of the first profiled element (1) in contact with the turned-back portion of carcass (20) being such that the coupling length L2, measured between the radially outermost point (21) in contact with the turned-back portion (20) and the axially outermost point Ae of the contact with the bead wire (5) is at most equal to half the length Lr of the turned-back portion (20), this length Lr being measured as the length of turned-back portion in contact with the first and second profiled elements, i.e. the contact length measured from the end (21) of the turned-back portion to the axially outermost point of contact Ae of the bead wire.

**2.** Assembly according to Claim 1, **characterized in that** the first profiled element (1) is made of a material having a secant extension modulus at 10% elongation that is at least equal to 40 MPa and at most equal to 70 MPa.

**3.** Assembly according to one of Claims 1 and 2, **characterized in that** the material that forms the first profiled element (1) is a rubber compound containing an additional reinforcing resin made up of a methylene acceptor such as a formophenolic resin, at a preferred content of between 3 and 15 phr, and a methylene donor such as hexamethylenetetramine (HMT) or even hexamethoxy-methylmelamine (HMMM, also known as H3M), at a preferred content of between 1 and 10 phr.

4. Assembly according to one of Claims 1 to 3, **characterized in that** the end (22) of the second profiled element (2) that is radially outermost with respect to the axis of rotation is at a distance H2 from the radially innermost point K of the bead wire, this distance being between 1 and 2.5 times the distance of the end of the turned-back portion Hc with respect to the radially innermost point K of the bead wire.

5. Assembly according to one of claims 1 to 4, **characterized in that** the point (12) of the first profiled element (1) in contact with the radially outermost carcass reinforcement is at a distance Hi that is greater than the distance He measuring the height of contact between the first profiled element and the turned-back portion, and **in that** this distance Hi is between 0.5 times and 1.25 times the distance Hc, these distances Hi, He, Hc being considered with respect to the radially innermost point K of the bead wire (5).

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5433257 A

- US 2009056851 A